# EUROPEAN PATENT APPLICATION

(11) **EP 4 246 480 A1**
(43) Date of publication of application: **20.09.2023**
(21) Application number: 21892093.2
(22) Date of filing: 01.09.2021
(51) Int. Cl.: G08B 13/12, G08B 25/10

(54) **MOTION-CURRENT SENSING-BASED PERIMETER INTRUSION DETECTION SYSTEM**

(30) Priority: 12.11.2020 KR 20200150605
(71) Applicant: E2 System Inc., Changwon-si, Gyeongsangnam-do 51234 (KR)
(72) Inventor: HWANG, Yun Doh, Changwon-si Gyeongsangnam-do 51234 (KR)
(74) Representative: HGF
(86) International application number: PCT/KR2021/011766
(87) International publication number: WO 2022/102923

(57) **Abstract**

Proposed is a motion-current sensing-based perimeter intrusion detection system that monitors whether an external intrusion has occurred, by sensing motion or a current value of a trip wire of an intrusion prevention structure installed in a perimeter boundary area. The system provides a system configuration for determining whether an external intrusion has occurred, by receiving trip wire motion information or a wire disconnection occurrence signal through a motion sensor or a disconnection detection sensor, so that unlike conventional technologies (intrusion detection systems based on detection of rotation of a wire wheel/rotating jig, and intrusion detection systems based on detection of tension), the motion-current sensing-based perimeter intrusion detection system is capable of accurately determining whether an external intrusion has occurred even when a trip wire is disconnected for an intrusion attempt while clamped, and is also capable of facilitating installation work and reducing system components damaged because of external intrusion attempts.

## Description

### Technical Field

The present disclosure relates to a system for monitoring whether an external intrusion has occurred, by sensing motion or a current value of a trip wire of an intrusion prevention structure installed in a perimeter boundary area. More particularly, the present disclosure relates to a motion-current sensing-based perimeter intrusion detection system that provides a system configuration for determining whether an external intrusion has occurred by receiving trip wire motion information or a wire disconnection occurrence signal through a motion sensor or a disconnection detection sensor, so that unlike conventional technologies (intrusion detection systems based on detection of rotation of a wire wheel/rotating jig, and intrusion detection systems based on detection of tension), the motion-current sensing-based perimeter intrusion detection system is capable of accurately determining whether an external intrusion has occurred even when a trip wire is disconnected for an intrusion attempt while clamped, and is also capable of facilitating installation work and reducing system components damaged because of external intrusion attempts.

### Background Art

In the initial stage of intrusion detection systems for access control for major national institutions or industrial facilities, and other various facilities and the protection of animals or livestock, one-dimensional physical security, which relied on barbed wire and fences, with security personnel providing security in person was the main form. However, as crime has diversified and become more intelligent, two-dimensional systems in which intrusion detectors are further installed at perimeter fences have been utilized. In addition, recently, there has been a development towards integrated crime prevention security systems based on detection by electronic fences, detection by CCTV systems linked to detection systems, and access control systems for external entrances and building interiors.

In the meantime, intrusion detection systems based on detection of rotation of a wire wheel/rotating jig and intrusion detection systems based on detection of tension have been developed and utilized, applied to an intrusion prevention structure such as a fence formed connecting a plurality of trip wires in a perimeter boundary area. As technologies related thereto, there are Korean Patents as follows: No. 10-0933240 "INTRUDER DETECTION SYSTEM FOR FENCE SECURITY USING WIRE WHEEL MECHANISM", No. 10-1088737 "TENSION SENSING TYPE GUARDING SYSTEM", and No. 10-1052561 "INTRUSION POSITION DETECTING SYSTEM USING TENSION DETECTION SYSTEM".

According to the "INTRUDER DETECTION SYSTEM FOR FENCE SECURITY USING WIRE WHEEL MECHANISM", security poles of a fence and intrusion detection wires between the security pole are installed and wire wheels are attached to the intrusion detection wires, so that when an intruder touches the intrusion detection wire, the wire wheel moves and intrusion is detected. The "TENSION SENSING TYPE GUARDING SYSTEM" includes a reverse compression pole formed at a rotating jig; a return elastic member having opposite ends supported by the rotating jig and a support shaft to accumulate elastic force when the rotating jig rotates; and a plurality of tension converter for converting tension change of a detection line into tension change of a tension transfer line. The tension change of the detection line corresponding to the force applied to the detection line is transmitted to the tension converter, and the tension change of the detection line is accurately converted into the tension change of the tension transmit line, thereby achieving intrusion detection.

In addition, the "INTRUSION POSITION DETECTING SYSTEM USING TENSION DETECTION SYSTEM" includes: a plurality of tension lines connected in horizontally between fixed poles constituting a section; a detector pole installed between the fixed poles; and a collection line fixed to the detector pole and perpendicularly connected to the tension lines, the collection line moving vertically in conjunction with motion of the tension lines, so that intrusion is monitored by detecting tension change of the tension lines of the fence. The intrusion position detecting system includes: at least one tension detector having unique identification information and installed at the section, and outputting an intrusion detection signal including the unique identification information when the tension change of the tension lines is detected; and a section location detector for receiving the intrusion detection signal and notifying a manager of information on the section in which the tension detector that has transmitted the intrusion detection signal is installed, by using the included identification information.

However, the conventional technologies are vulnerable to intrusion detection because the conventional technologies have a structure that is unable of detecting a situation in which an intruder fixes a wire wheel/rotating jig with a special device and then cuts the wire, or an intruder cuts the wire section between two points of a wire while the two points are clamped.

### Disclosure

### Technical Problem

Accordingly, the present disclosure has been made keeping in mind the above problems occurring in the related art, and the present disclosure is directed to providing a new type of a motion-current sensing-based perimeter intrusion detection system, the motion of a trip wire of an intrusion prevention structure in detected through a motion sensor and trip wire motion information is generated and transmitted to a control server to determine whether the trip wire motion information indicates abnormality, or a disconnection detection sensor for detecting wire disconnection by detecting current depending on the application of power to a conductor trip wire is used, thereby providing a system configuration for monitoring whether an external intrusion has occurred. Accordingly, unlike the conventional technologies (intrusion detection systems based on detection of rotation of a wire wheel/rotating jig, and intrusion detection systems based on detection of tension), the motion-current sensing-based perimeter intrusion detection system is capable of accurately determining whether an external intrusion has occurred even when a trip wire is disconnected for an intrusion attempt while clamped. In addition, the motion-current sensing-based perimeter intrusion detection system is capable of facilitating installation work and reducing system components damaged because of external intrusion attempts.

### Technical Solution

According to the features of the present disclosure for achieving the above-mentioned purposes, there is provided a motion-current sensing-based perimeter intrusion detection system including: at least one sensor selected from a group of: a motion sensor 100 installed on a trip wire 3 of an intrusion prevention structure 2 installed in a perimeter boundary area, and configured to detect motion of the trip wire 3 and generate trip wire motion information; and a disconnection detection sensor 200 installed at a fixture 4 that fixes a conductor trip wire 3 of the intrusion prevention structure 2 installed in the perimeter boundary area, and configured to detect whether the conductor trip wire 3 is disconnected, by applying power and detecting current for the conductor trip wire 3, and to generate a wire disconnection occurrence signal when the conductor trip wire is disconnected; and
a control server 300 configured to monitor whether an external intrusion has occurred, by receiving any one selected from among the trip wire motion information and the wire disconnection occurrence signal from any one selected from among the motion sensor 100 and the disconnection detection sensor 200.

In the motion-current sensing-based perimeter intrusion detection system according to the present disclosure, the control server 300 may include: a motion information DB 310 in which abnormality determination motion information is set, wherein the abnormality determination motion information is information on a trip wire motion change caused by an external intrusion, not on a trip wire motion change caused by a weather factor and an environmental factor; and an intrusion determination computation module 320 configured to compare the trip wire motion information input from the motion sensor 100 with the abnormality determination motion information of the motion information DB 310 to determine whether an external intrusion has occurred at the intrusion prevention structure 2, and generate external intrusion occurrence information when it is determined that the external intrusion has occurred.

In the motion-current sensing-based perimeter intrusion detection system according to the present disclosure, the motion sensor 100 may include at least one selected from a group of: a position sensor 110 fixed to the trip wire 3 and configured to detect a position change of a fixed point as the trip wire motion information; a speed sensor 120 fixed to the trip wire 3 and configured to detect a speed change of a fixed point as the trip wire motion information; an acceleration sensor 130 fixed to the trip wire 3 and configured to detect an acceleration change of a fixed point as the trip wire motion information; and a gyro sensor 140 fixed to the trip wire 3 and configured to detect an angular velocity change of a fixed point as the trip wire motion information.

In the motion-current sensing-based perimeter intrusion detection system according to the present disclosure, a plurality of the motion sensors 100 may be installed at intervals on the trip wire 3.

In the motion-current sensing-based perimeter intrusion detection system according to the present disclosure, the control server 300 may be configured to communicate wirelessly with any one selected from among the motion sensor 100 and the disconnection detection sensor 200, and the trip wire motion information and the wire disconnection occurrence signal may include location identification information so that an external intrusion occurrence location is monitored.

In the motion-current sensing-based perimeter intrusion detection system according to the present disclosure, the disconnection detection sensor 200 may include: an applied-power setting module 210 configured to set a level value range of the power applied to the conductor trip wire 3; and a normal current value setting module 220 configured to set a normal value range of the current that flows through the conductor trip wire 3 as the power is applied.

### Advantageous Effects

In the motion-current sensing-based perimeter intrusion detection system according to the present disclosure, the motion or the current value of a trip wire of an intrusion prevention structure installed in a perimeter boundary area is sensed to monitor whether an external intrusion has occurred, so that unlike the conventional technologies (intrusion detection systems based on detection of rotation of a wire wheel/rotating jig, and intrusion detection systems based on detection of tension), whether an external intrusion has occurred can be accurately determined even when a trip wire is disconnected for an intrusion attempt while clamped. In addition, installation work can be facilitated, and system components damaged because of external intrusion attempts can be reduced.

### Description of Drawings

FIGS. 1(a) to 1(c) are configuration diagrams illustrating installation of sensors of a motion-current sensing-based perimeter intrusion detection system according to an embodiment of the present disclosure;
FIG. 2 is an exemplary diagram illustrating types of motion sensors according to an embodiment of the present disclosure;
FIG. 3 is a configuration diagram illustrating arrangement of motion sensors according to an embodiment of the present disclosure;
FIG. 4 is a block diagram illustrating a configuration of a disconnection detection sensor according to an embodiment of the present disclosure; and
FIG. 5 is a block diagram illustrating a configuration of a motion-current sensing-based perimeter intrusion detection system according to an embodiment of the present disclosure.

### Best Mode

Hereinafter, an embodiment of the present disclosure will be described in detail with reference to the accompanying drawings 1 to 5. In the meantime, in the drawings and detailed description, configurations and operations that can be easily understood by those skilled in the art will be briefly illustrated and mentioned, or omitted. In particular, in the drawings and detailed description, detailed technical configurations and operations of elements that are not directly related to the technical features of the present disclosure will not be described and illustrated in detail, and only the technical configurations related to the present disclosure will be briefly illustrated or described.

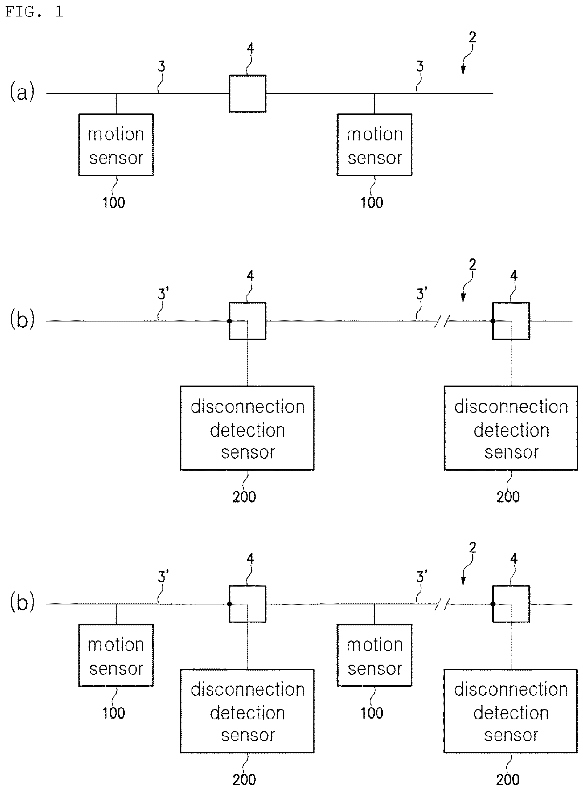

According to the present disclosure, a motion-current sensing-based perimeter intrusion detection system 1 may be equipped with only motion sensors 100 as sensors as shown in FIG. 1(a), or with only disconnection detection sensors 200 as sensors as shown in FIG. 1(b), or with motion sensors 100 and disconnection detection sensors 200 together as sensors as shown in FIG. 1(c).

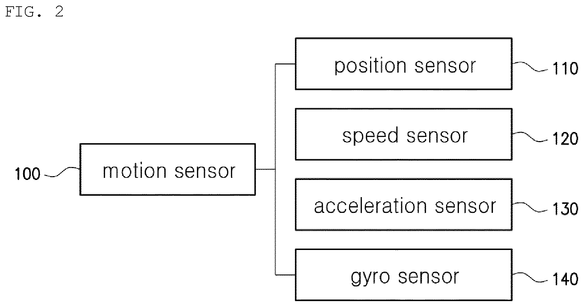

A motion sensor 100 is installed on a trip wire 3 of an intrusion prevention structure 2 installed in a perimeter boundary area, and detects the motion of the trip wire 3 to generate trip wire motion information. Herein, as a motion sensor 100, a position sensor 110, a speed sensor 120, an acceleration sensor 130, and a gyro sensor 140 may be used as shown in FIG. 2. In addition, a motion sensor 100 may be used as one module that is a combination of some or all of the aforementioned multiple types of sensors.

The position sensor 110 is a sensor that is fixed to the trip wire 3 and detects a position change of the fixed point as trip wire motion information. The speed sensor 120 is a sensor that is fixed to the trip wire 3 and detects a speed change of the fixed point as trip wire motion information. The acceleration sensor 130 is a sensor that is fixed to the trip wire 3 and detects an acceleration change of the fixed point as trip wire motion information. The gyro sensor 140 is a sensor that is fixed to the trip wire 3 and detects an angular velocity change of the fixed point as trip wire motion information.

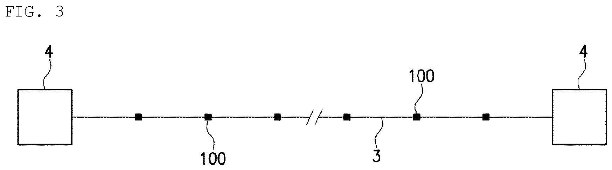

Herein, in the motion-current sensing-based perimeter intrusion detection system 1 according to an embodiment of the present disclosure, a plurality of motion sensors 100 are fixedly arranged at intervals on each individual trip wire 3 as shown in FIG. 3, and each of the motion sensors 100 is given an identification code to link installation location information of the motion sensors 100 so as to detect a location of a point where the trip wire 3 is disconnected or deformed and an external intrusion has occurred.

A disconnection detection sensor 200 is installed at a fixture 4 that fixes a conductor trip wire 3 of the intrusion prevention structure 2 installed in the perimeter boundary area. The disconnection detection sensor 200 detects whether the conductor trip wire 3 is disconnected, by applying power and detecting current for the conductor trip wire 3, and generates a wire disconnection occurrence signal when the conductor trip wire is disconnected. Such disconnection detection sensors 200 are installed one by one corresponding to each individual trip wires 3. In addition, each disconnection detection sensor 200 is given an identification code, so installation location information of the disconnection detection sensors 200 is linked. Accordingly, it is possible to detect a location of a point where the trip wire 3 is disconnected and an external intrusion has occurred.

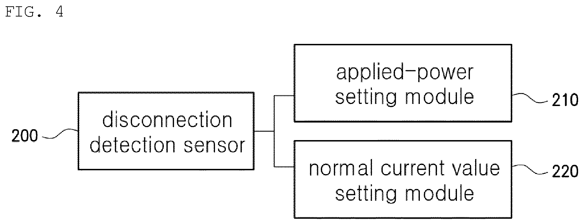

Herein, a disconnection detection sensor 200 is equipped with an applied-power setting module 210 and a normal current value setting module 220 as shown in FIG. 4. The applied-power setting module 210 is a module for setting a level value range of the power applied to the conductor trip wire 3. The normal current value setting module 220 is a module for setting a normal value range of the current that flows through the conductor trip wire 3 as the power is applied. Through this, when the disconnection detection sensor 200 detects the current out of the normal value range, it is determined that the conductor trip wire 3 is disconnected.

In addition, the motion-current sensing-based perimeter intrusion detection system 1 according to the present disclosure includes a control server 300.

The control server 300 receives trip wire motion information or a wire disconnection occurrence signal from a motion sensor 100 or a disconnection detection sensor 200 to monitor whether an external intrusion has occurred. A manager terminal 400 accesses the control server 300 to discover the trip wire motion information or the wire disconnection occurrence signal, or to discover whether an external intrusion has occurred. Herein, when the wire disconnection occurrence signal is input from the disconnection detection sensor 200, it is determined that an external intrusion has occurred.

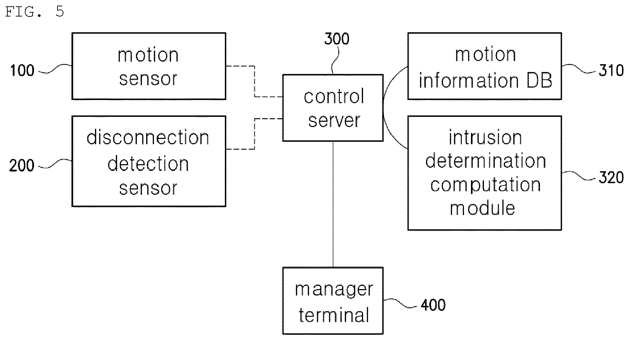

According to an embodiment of the present disclosure, the control server 300 includes a motion information DB 310 and an intrusion determination computation module 320 as shown in FIG. 5.

The motion information DB 310 is a database in which abnormality determination motion information is set, which is information on a trip wire motion change caused by an external intrusion, not on a trip wire motion change caused by a weather factor and an environmental factor.

The intrusion determination computation module 320 compares trip wire motion information input from a motion sensor 100 with the abnormality determination motion information of the motion information DB 310 to determine whether an external intrusion has occurred at the intrusion prevention structure 2, and generates external intrusion occurrence information when it is determined that an external intrusion has occurred. Herein, the intrusion determination computation module 320 determines that an external intrusion has occurred when a wire disconnection occurrence signal is input from a disconnection detection sensor 200 and immediately generates external intrusion occurrence information.

In the meantime, according to an embodiment of the present disclosure, the control server 300 communicates wirelessly with a motion sensor 100 or a disconnection detection sensor 200. In addition, trip wire motion information and a wire disconnection occurrence signal include location identification information so that an external intrusion occurrence location is monitored.

In the motion-current sensing-based perimeter intrusion detection system 1 according to an embodiment of the present disclosure configured as described above, the motion of a trip wire 3 of the intrusion prevention structure 2 is detected through a motion sensor 100 and trip wire motion information is generated and transmitted to the control server 300 to determine whether the trip wire motion information indicates abnormality, or a disconnection detection sensor 200 for detecting wire disconnection by detecting current depending on the application of power to a conductor trip wire 3 is used, thereby providing a system configuration for monitoring whether an external intrusion has occurred. Accordingly, unlike the conventional technologies (intrusion detection systems based on detection of rotation of a wire wheel/rotating jig, and intrusion detection systems based on detection of tension), the motion-current sensing-based perimeter intrusion detection system is capable of accurately determining whether an external intrusion has occurred even when a trip wire is disconnected for an intrusion attempt while clamped. In addition, the motion-current sensing-based perimeter intrusion detection system is capable of facilitating installation work and reducing system components damaged because of external intrusion attempts.

As described above, the motion-current sensing-based perimeter intrusion detection system according to an embodiment of the present disclosure have been described and illustrated with reference to the accompanying drawings, but this is merely an example and those skilled in the art will appreciate that various modifications and changes may be made without departing from the scope of the technical idea of the present disclosure.

## Claims

1. A motion-current sensing-based perimeter intrusion detection system, comprising:
at least one sensor selected from a group of:
a motion sensor (100) installed on a trip wire (3) of an intrusion prevention structure (2) installed in a perimeter boundary area, and configured to detect motion of the trip wire (3) and generate trip wire motion information; and
a disconnection detection sensor (200) installed at a fixture (4) that fixes a conductor trip wire (3) of the intrusion prevention structure (2) installed in the perimeter boundary area, and configured to detect whether the conductor trip wire (3) is disconnected, by applying power and detecting current for the conductor trip wire (3), and to generate a wire disconnection occurrence signal when the conductor trip wire is disconnected; and
a control server (300) configured to monitor whether an external intrusion has occurred, by receiving any one selected from among the trip wire motion information and the wire disconnection occurrence signal from any one selected from among the motion sensor (100) and the disconnection detection sensor (200).

2. The motion-current sensing-based perimeter intrusion detection system of claim 1, wherein the control server (300) comprises:
a motion information DB (310) in which abnormality determination motion information is set, wherein the abnormality determination motion information is information on a trip wire motion change caused by an external intrusion, not on a trip wire motion change caused by a weather factor and an environmental factor; and
an intrusion determination computation module (320) configured to compare the trip wire motion information input from the motion sensor (100) with the abnormality determination motion information of the motion information DB (310) to determine whether an external intrusion has occurred at the intrusion prevention structure (2), and generate external intrusion occurrence information when it is determined that the external intrusion has occurred.

3. The motion-current sensing-based perimeter intrusion detection system of claim 1, wherein the motion sensor 100 comprises at least one selected from a group of:
a position sensor (110) fixed to the trip wire (3) and configured to detect a position change of a fixed point as the trip wire motion information;
a speed sensor (120) fixed to the trip wire (3) and configured to detect a speed change of a fixed point as the trip wire motion information;
an acceleration sensor (130) fixed to the trip wire (3) and configured to detect an acceleration change of a fixed point as the trip wire motion information; and
a gyro sensor (140) fixed to the trip wire (3) and configured to detect an angular velocity change of a fixed point as the trip wire motion information.

4. The motion-current sensing-based perimeter intrusion detection system of claim 1, wherein a plurality of the motion sensors (100) are installed at intervals on the trip wire (3).

5. The motion-current sensing-based perimeter intrusion detection system of claim 1, wherein the control server (300) is configured to communicate wirelessly with any one selected from among the motion sensor (100) and the disconnection detection sensor (200), and
the trip wire motion information and the wire disconnection occurrence signal comprise location identification information so that an external intrusion occurrence location is monitored.

6. The motion-current sensing-based perimeter intrusion detection system of claim 1, wherein the disconnection detection sensor (200) comprises:
an applied-power setting module (210) configured to set a level value range of the power applied to the conductor trip wire (3); and
a normal current value setting module (220) configured to set a normal value range of the current that flows through the conductor trip wire (3) as the power is applied.
